# EUROPÄISCHE PATENTSCHRIFT

(11) **EP 0 871 824 B1**
(45) Veröffentlichungstag und Bekanntmachung des Hinweises auf die Patenterteilung: **14.11.2001**
(21) Anmeldenummer: 96940972.1
(22) Anmeldetag: 16.12.1996
(51) Int. Cl.: F16B 7/04

(54) **KLEMMVORRICHTUNG ZUM LÖSBAREN VERBINDEN ZWEIER PROFILSTÜCKE**
CLAMPING DEVICE FOR RELEASABLY SECURING TWO SECTIONS
DISPOSITIF DE SERRAGE POUR ASSEMBLAGE SEPARABLE DE DEUX PIECES PROFILEES

(30) Priorität: 09.01.1996 CH 5496; 22.04.1996 CH 101596
(43) Veröffentlichungstag der Anmeldung: 21.10.1998
(73) Patentinhaber: SYMA INTERCONTINENTAL AG, CH-9533 Kirchberg (CH)
(72) Erfinder: STRÄSSLE, Marcel, CH-9533 Kirchberg (CH); ZÜLLIG, Kurt, CH-9533 Kirchberg (CH)
(74) Vertreter: Liebetanz, Michael, Dipl.-Phys.
(86) Internationale Anmeldenummer: CH9600440
(87) Internationale Veröffentlichungsnummer: WO9725536

(56) Entgegenhaltungen:
- EP-A- 0 412 339
- DE-A- 4 119 326
- DE-A- 4 225 926
- DE-A- 4 328 832
- FR-A- 2 152 941

## Beschreibung

Die vorliegende Erfindung betrifft eine Klemmvorrichtung zum lösbaren Verbinden zweier Profilstücke gemäss dem Oberbegriff des Patentanspruchs 1.

Eine Klemmvorrichtung dieser Art ist aus der DE-A-42 25 926 bekannt. Bei dieser Klemmvorrichtung werden zwei Klemmelemente axial verschoben, um dabei durch ein System von Gleitflächen bei einer axialen Bewegung des Bolzens eine Schwenkung der Haltestücke zu bewirken. Die freien Endbereiche der Haltestücke sind jeweils hakenförmig ausgebildet, um beim Schwenken den gewünschten Klemmdruck auszuüben. Diese Klemmvorrichtung weist aber den Nachteil auf, dass die beiden Klemmhaken unterschiedlich belastet und mit Kräften beaufschlagt werden, so dass einerseits durch das Auftreten von Verkantungen der Zusammenbau erschwert wird und dass andererseits die Klemmelemente ein Spiel haben, welches zu einer erhöhten Abnutzung führt. Dies führt zu der Notwendigkeit einer grosszügig dimensionierten Auslegung und damit zu einer grösseren Dicke der Klemmvorrichtung.

Eine weitere Klemmvorrichtung ist aus der EP-B1-0 506 607 bekannt. Bei dieser Klemmvorrichtung weist der Bolzen Tragmittel zur schwenkbaren Lagerung von mehreren Haltestücken auf, wobei jedes Haltestück und die Innenwände des Einsatzkerns ein System von Gleitflächen umfassen, um bei einer axialen Bewegung des Bolzens eine Schwenkung der Haltestücke zu bewirken.

Ferner beschreibt die FR-PS-2.152.941 eine erste Vorrichtung mit Halteelementen, die um eine ortsfest im Gehäuse angeordnete Achse drehbar gelagert sind. Diese Vorrichtung hat keinen Bolzen und keine Schraube, die über Gleitflächen in den Bolzen eingreift, sondern die Halteelemente werden vielmehr durch einen Exzenter geschwenkt, dessen Höhe der Breite des Gehäuses entspricht. Das Gehäuse hat keine Gleitflächen, die bei einer axialen Bewegung der Halteelemente die Schwenkung derselben bewirken, sondern die Gleitflächen befinden sich im Exzenter und im unteren Bereich der Halteelemente oder eines die Halteelemente verschiebenden Druckstückes. Bei einer zweiten in der erwähnten französischen Patentschrift beschriebenen Vorrichtung ist quer im Gehäuse ein Bolzen montiert, der die Gleitflächen zur Schwenkbewegung der Halteelemente bildet.

Schliesslich sind flache Klinken mit als Haken arbeitenden umgebogenen Enden aus der EP-0 238 848 B1 bekannt.

Ausgehend von diesem Stand der Technik liegt der Erfindung die Aufgabe zugrunde, die eingangs genannte Klemmvorrichtung so zu verbessern, dass sie im wesentlichen symmetrisch belastet wird, flacher ausgestaltet werden kann und weiterhin über gute Klemmeigenschaften verfügt.

Diese Aufgabe wird erfindungsgemäss durch eine Klemmvorrichtung mit den im kennzeichnenden Teil des Patentanspruchs 1 angegebenen Merkmalen gelöst.

Weitere vorteilhafte Ausgestaltungen der Erfindung sind in den abhängigen Ansprüchen angegeben.

Die Erfindung wird nachfolgend beispielsweise anhand einer Zeichnung näher erläutert. Es zeigen:
- Figur 1: eine Schnittdarstellung durch die Exzenterachse einer erfindungsgemässen Klemmvorrichtung mit Einsatzkern im geschlossenen Zustand,
- Figur 2: eine Draufsicht auf einen Teil dieser Klemmvorrichtung und auf deren Schieber im geschlossenen Zustand,
- Figur 3: eine Schnittdarstellung durch die Exzenterachse einer erfindungsgemässen Klemmvorrichtung mit Einsatzkern im offenen Zustand,
- Figur 4: eine Draufsicht auf einen Teil dieser Klemmvorrichtung und auf deren Schieber im offenen Zustand,
- Figur 5: eine Schnittdarstellung nach Linie V-V in Figur 3,
- Figur 6: eine Schnittdarstellung nach Linie VI-VI in Figur 4,
- Figuren 7 und 8: Darstellungen eines solchen Schiebers,
- Figur 9: eine seitliche Ansicht einer erfindungsgemässen Klinke,
- Figur 10: eine Draufsicht auf eine erfindungsgemässe Klinke,
- Figuren 11 bis 13: Darstellungen eines speziellen Querstegs nach der Erfindung,
- Figuren 14 bis 16: Darstellungen eines speziellen Exzenters nach der Erfindung,
- Figur 17: eine Schnittdarstellung durch die Exzenterachse einer weiteren Ausführung einer solchen Klemmvorrichtung mit Einsatzkern im geschlossenen Zustand,
- Figur 18: eine Draufsicht auf einen Teil dieser Klemmvorrichtung und auf deren Schieber,
- Figur 19: eine Schnittdarstellung der Exzenterpartie dieser Klemmvorrichtung in einer Ebene quer zur Längsachse,
- Figuren 20 bis 22: Darstellungen eines solchen Schiebers,
- Figur 23: eine seitliche Ansicht einer erfindungsgemässen Klinke,
- Figur 24: eine Draufsicht auf eine erfindungsgemässe Klinke,
- Figur 25: eine Frontansicht dieser Klinke,
- Figur 26 eine Draufsicht auf das untere Gehäuse dieser Ausführung,
- Figur 27: eine Schnittdarstellung nach Linie A-A in Figur 26,
- Figur 28: eine Frontansicht des Gehäuses, und
- Figuren 29 und 30: Darstellungen eines Deckels für dieses Gehäuse.

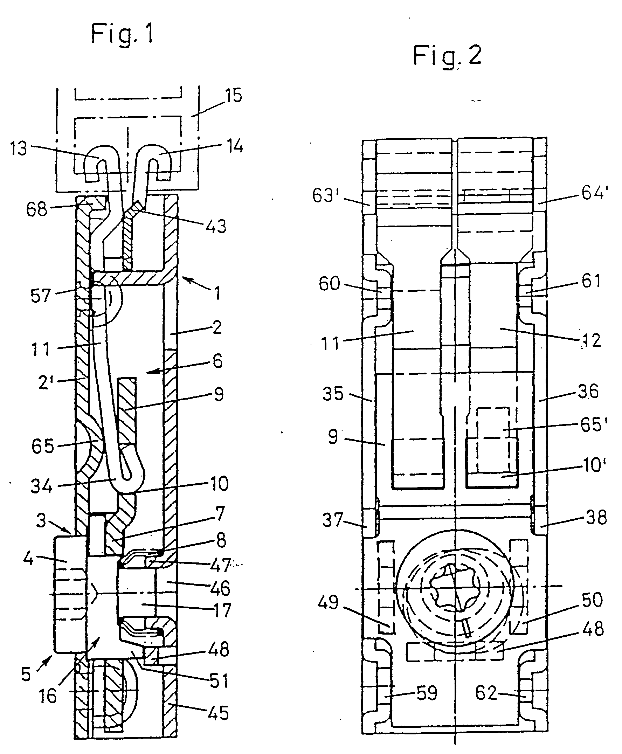

Figur 1 zeigt einen in ein erstes nicht dargestelltes Profilstück eingeschobenen und arretierten Einsatzkern 1, beispielsweise aus Blech, mit einem Bodenteil 2 und einen Dekkel 2'. Der Deckel 2' des Einsatzkerns 1 ist mit einer Querbohrung 3 zur Aufnahme des Kopfes 4 eines Exzenters 5 versehen. Zwischen dem Bodenteil 2 und dem Deckel 2' befindet sich ein länglicher Innenraum 6 zur Aufnahme eines vorzugsweise nichtelastischen bzw. starren Ankers oder Schiebers 7, der nach einem Druckgussverfahren oder vorzugsweise als Stanzteil hergestellt werden kann.

Das Profilstück kann beispielsweise auch ähnlich den entsprechenden in der CH-A-576 591 oder EP-B1-0 506 607 oder EP-B1-0 123 683 beschriebenen Elementen ausgebildet sein.

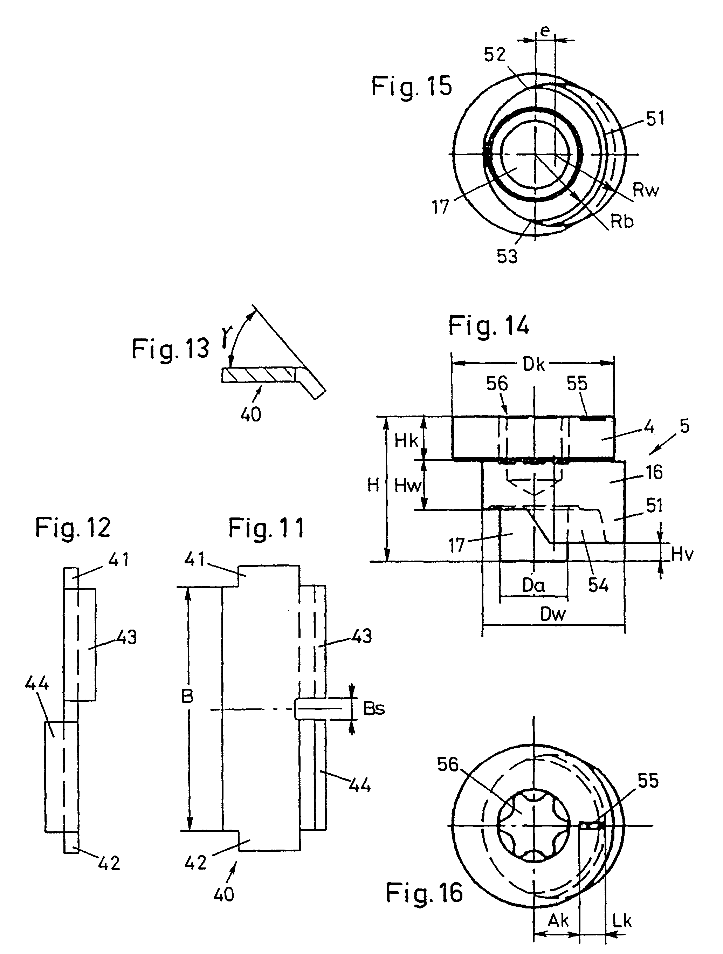

Der Anker 7 ist im Innenraum 6 verschiebbar angeordnet, wobei sich auch eine in Figur 1 nur angedeutete Schraubenfeder 8 in einer Bohrung 54 (Fig. 14) zwischen dem Exzenter und dem Bodenteil 2 befindet.

Figur 2 zeigt, dass der Schieber 7 breit und flach ausgebildet ist und eine obere Kupplungspartie 9 mit zwei rechteckigen Öffnungen 10, 10' aufweist, die zur schwenkbaren Lagerung von Haltestücken oder Klinken 11, 12 dient, die auch Klemmelemente genannt werden. Solche Haltestücke weisen eine als einen Klemmhaken arbeitende Nase 13, 14 (Fig. 1) auf, die in eine Öffnung eines Profilstücks 15 einfügbar ist, um einen Klemmdruck gegen eine Partie dieses Profilstücks 15 auszuüben, die die Öffnung teilweise abschliesst, wobei diese Klinken 11, 12 nichtalternierend (Fig. 2) oder alternierend (Fig. 1) mit der Nase 13, 14 in der einen oder der anderen Richtung angeordnet sein können. Der Exzenter 5 der Klemmvorrichtung weist einen relativ hohen Exzenterkopf 4, eine exzentrisch zum Exzenterkopf 4 angeordnete Exzenterwalze 16 und eine mit dem Exzenterkopf koaxiale Welle 17 auf.

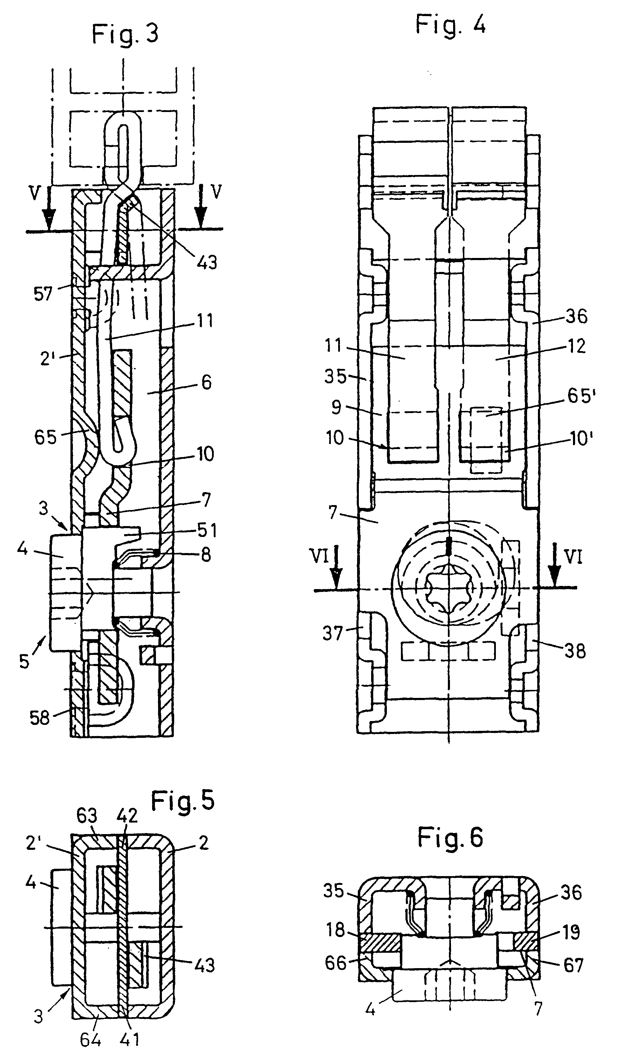

Die Figuren 3 und 4 zeigen die Klemmvorrichtung im offenen Zustand, und aus den Figuren 5 und 6 ist ersichtlich, dass der Exzenterkopf 4 etwas aus der Öffnung 3 des Deckels 2' herausragt.

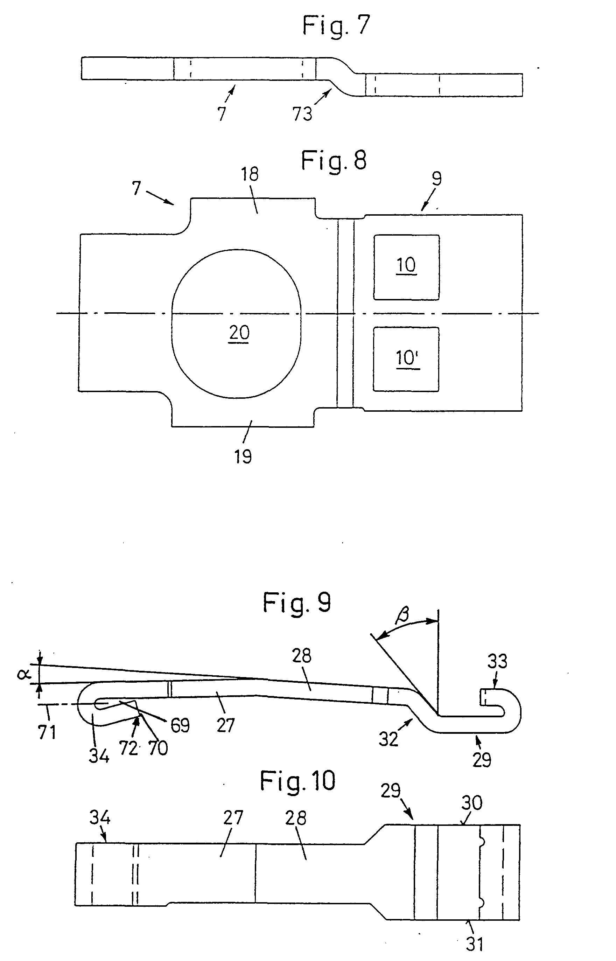

Der Schieber 7 nach den Figuren 7 und 8 besteht grundsätzlich aus einem plattenförmigen Stück mit einem mittleren Teil, der zwei kurze nach aussen erweiterte parallele Randstreifen 18, 19 und eine Öffnung 20 in Form eines asymmetrischen in Fig. 8 nach rechts und nach unten erweiterten Langlochs aufweist.

Die Klinken 11, 12 nach den Figuren 9 und 10 bestehen grundsätzlich aus einem länglichen plattenförmigen Stück. Eine solche Klinke ist im mittleren Bereich um einen kleinen Winkel α von etwa 5° gebogen und definiert somit einen unteren im wesentlichen geraden Klinkenteil 27 und einen oberen im wesentlichen geraden Klinkenteil 28, der eine obere Endpartie 29 umfasst, die links und rechts je eine erweiterte Randpartie 30, 31 aufweist. Für den Winkel α kann beispielsweise die Beziehung 1° ≤ α ≤ 10° gelten. Die Endpartie 29 mit den Randpartien 30, 31 umfasst eine Übergangspartie 32, die durch eine erste Biegung in einem Winkel β von vorzugsweise 30° bis 50° nach rechts (Fig. 9) und durch eine zweite Biegung mit etwa demselben Winkel β nach links in eine Ebene versetzt ist, die etwa parallel zu der breiten Seite des Klinkenteils 27 verläuft. Der Endbereich der oberen Endpartie 29 des oberen Klinkenteils 28 ist um ca. 180° im Fig. 9 nach links umgebogen, um einen ersten Haken oder Klemmhaken 33 zu bilden. Demgegenüber ist der Endbereich des unteren Klinkenteils 27 in einem Winkel von 180° in Fig. 9 nach rechts umgebogen, um eine zweiten Haken 34 oder Scharnierhaken zu bilden.

Der Scharnierhaken 34 der Klinke ist lose, jedoch mit wenig Spiel in der vorzugsweise rechteckförmig ausgebildeten Öffnung 10 des Schiebers 7 untergebracht, und zwar derart, dass die Klinke mindestens in einem kleinen Winkel schwenkbar ist. Der Schieber 7 ist verschiebbar zwischen zwei seitlichen länglichen Wandpartien 35, 36 (Fig. 2) des Bodenteils 2 angeordnet. Zu diesem Zweck weisen die Wandpartien 35, 36 je eine längliche Öffnung 37 bzw. 38 auf, bei der die Wandpartie stirnseitig jeweils eine Gleitfläche für die erweiterte Randpartie 18, 19 des Schiebers 7 bildet. Die Länge der Öffnungen 37, 38 ist so viel grösser als die der Randpartien 18, 19, dass dadurch ein Verschiebungsweg definiert bzw. beschränkt wird.

Der Steg 40 nach Fig. 11 ist länglich ausgebildet und weist an seinen beiden Enden je eine kurze Erweiterung 41 und 42 auf, die zur Befestigung des Stegs in entsprechenden Öffnungen der schmalen Seitenwände der Klemmvorrichtung dienen. Gemäss Fig. 11 weist der schmale längliche Rand des Stegs zwei Erweiterungen 43, 44 auf, die kürzer als die Hälfte der Länge B der äusseren länglichen Kante des Stegs 40 sind, wobei die Länge B vorzugsweise der Breite des Innenraums der Klemmvorrichtung entspricht. In Fig. 12 ist die eine Erweiterung 43 nach unten und die andere Erweiterung 44 nach oben abgewinkelt, und zwar jeweils in einem Winkel γ von etwa 45° bis 55°. Fig. 11 zeigt, dass die Erweiterungen 43 und 44 durch eine Unterbrechung der Breite Bs getrennt sind.

Der Boden 45 (Fig. 1) des vorzugsweise im Querschnitt etwa U-förmig ausgebildeten Bodenteils 2 weist eine runde Öffnung 46 mit einem inwendigen ringförmigen Wulst 47 auf. Zwischen dem Wulst 47 und den Wandpartien 35, 36 befindet sich inwendig im Boden 45 eine zwischen zwei parallelen Einschnitten geprägte Erhöhung 48, die quer zur Bewegungsrichtung des Schiebers verläuft. In einem der Öffnung 46 benachbarten Bereich der Wand 35 bzw. 36 weist der Boden 45 ebenfalls je einen inwendigen beulenartig geprägten Vorsprung 49 bzw. 50 auf.

Der Exzenter 5 mit einer Gesamthöhe H nach den Figuren 14 bis 16 umfasst den bereits erwähnten Exzenterkopf 4 mit Durchmesser Dk und Höhe Hk, die Exzenterwalze 16 mit Durchmesser Dw und die Exzenterwelle 17 mit Durchmesser Da. Die Exzenterwalze 16 ist exzentrisch einstückig mit dem Exzenterkopf ausgebildet, wobei in Fig. 15 die entsprechende Exzentrizität mit e bezeichnet ist. Die Exzenterwalze weist eine etwa mondförmige Wand 51 mit zwei Mondspitzen 52, 53 auf, welche innenseitig durch eine mit dem Exzenterkopf 4 konzentrische ringförmige Bohrung 54 gebildet ist. Die Exzenterwelle 17 ist konzentrisch im Innenraum dieser Bohrung 54 gebildet, aus der sie in einer Höhe Hv herausragt. Der vollständige Teil der Exzenterwalze 16 weist eine Höhe Hw auf. In Fig. 15 ist die mondförmige Wand 51 deutlich zwischen einem Kreis mit Radius Rw = Dw/2 und einem Bogen mit dem Radius Rb der Bohrung 54 dargestellt. Stirnseitig auf dem Exzenterkopf 4 ist eine Markierung 55 vorhanden, deren innerer Endpunkt sich in einem Abstand Ak von der geometrischen Drehachse des Exzenterkopfs 4 befindet, der gemäss Fig. 16 stirnseitig auch mit einer Schlüsseleingriffsfläche 56 zur Übertragung eines Drehmomentes versehen ist.

Der Deckel 2' (Fig. 1 und 3) besteht grundsätzlich aus einem plattenförmigen Stück, das nebst der runden Bohrung 3 für den Exzenterkopf 4 vier kleine Öffnungen 57, 58, ... aufweist, die mit Vorsprüngen 59, 60, 61 und 62 (Fig. 2) des Bodenteils 2 zusammenwirken. Wenn der Deckel 2' durch Einführung der Vorsprünge 59, 60, 61, 62 in die vier Öffnungen 57, 58, ... montiert ist, kann das Gehäuse durch Vernietung fabrikmässig verschlossen werden.

Im Bereich zwischen der Öffnung 57 und dem oberen Deckelende weist der Deckel 2' rechts und links je eine laschenförmig abgewinkelte Erweiterung 63 und 64 (Fig. 5) auf, die mit je einem entsprechenden Ausschnitt 63', 64' (Fig. 2) in den Seitenwänden 35, 36 des Bodenteils 2 zusammenwirken, um dazwischen die Erweiterungen 41 bzw. 42 (Fig. 5) des Stegs 40 fest zu halten.

Im Bereich des Deckels gegenüber der Öffnung 10 des Schiebers 7 befindet sich eine inwendige beulenartig zwischen zwei parallelen Einschnitten geprägte Erhöhung 65, die parallel zur Bewegungsrichtung des Schiebers 7 verläuft. Analog dazu befindet sich im Bereich des Bodenteils gegenüber der Öffnung 10' des Schiebers 7 eine inwendige beulenartig zwischen zwei parallelen Einschnitten geprägte Erhöhung 65', die ebenfalls parallel zur Bewegungsrichtung des Schiebers 7 verläuft.

Im Bereich nahe den Führungs-Öffnungen 37 und 38 weist der Deckel 2' rechts und links je eine laschenförmig abgewinkelte Erweiterung 66, 67 (Fig. 6) auf, die mit je einem der entsprechenden Ausschnitte in den Seitenwänden 35, 36 des Bodenteils 2 zusammenwirken, um dazwischen die Ränder 18 und 19 (Fig. 8) des Schiebers 7 zu führen.

Die erfindungsgemässe Klemmvorrichtung nach den Figuren 1 bis 16 funktioniert folgendermassen:

Die Klinken 11 und 12 sind vorzugsweise gleich. Der Scharnierhaken 34 der Klinke 11 ist von oben in der Öffnung 10 montiert, während der Scharnierhaken der Klinke 12 von unten in der Öffnung 10' montiert ist. Im offenen Zustand (Fig. 3) ist der Schieber 7 nach aussen gedrückt, und die zwei Klemmhaken der Klinken 11 und 12 ragen parallel nebeneinander aus dem durch den Bodenteil 2 und den Deckel 2' gebildeten Gehäuse heraus.

In diesem Zustand kann der Exzenter 5 gegen die Wirkung der Schraubenfeder 8 durch die Öffnung 3 des Deckels 2' ins Gehäuse hineingedrückt werden, mindestens so weit bis die Stirnfläche des Exzenterkopfs 4 mit der äusseren Oberfläche des Deckels 2' fluchtet, weil die mondförmige Wand 51 in dieser Lage einen freien Weg für ihre Bewegung findet. Ohne äusseren Druck wirkt jedoch die Feder 8 derart, dass der Kopf 4 aus der Bohrung 3 herausragt, was für das Einklemmen der Klemmvorrichtung im ersten Profilstück nützlich ist.

Beim Drehen des Exzenters 5 drückt die Exzenterwalze 16 gegen den Rand der Öffnung 20 des Schiebers 7, so dass der Schieber 7 nach innen gedrückt wird, und die Rampen der Bereiche 32 (Fig. 9) der Klinken rutschen gegen die geneigten Flächen 43, 44 des Stegs 40, so dass die Klinken nach aussen geschwenkt werden, und die Klemmvorrichtung ist dann geschlossen oder fest arretiert. Im geschlossenen Zustand stützt sich die mondförmige Wand 51 der Exzenterwalze 16 auf den Vorsprung 48, so dass der Exzenterkopf 4 etwas aus dem Gehäuse herausragt und dadurch auch in einer entsprechenden Öffnung des ersten Profilstücks unverlierbar eingeklemmt bleibt. Im offenen Zustand befindet sich jedoch die mondförmige Wand 51 der Exzenterwalze 16 in einer vom Vorsprung 48 entfernteren Lage, so dass der Exzenter 5 gegen die Wirkung der Feder 8 ins Innere des Gehäuses gedrückt werden kann, was die Befreiung der Klemmvorrichtung aus dem ersten Profilstück erlaubt.

Die Klemmvorrichtung wird durch Drehen des Exzenterkopfs 5 in der anderen Richtung geöffnet. Die Erhöhungen 65, 65' sind derart angeordnet, dass die Klinken bei der dabei bewirkten Bewegung derselben nach innen hineingedrückt, das heisst gerade gestellt werden. Um die Klinken in der geschlossenen Lage besser zu halten, können an diesen Stellen die Enden des Deckels 2' und des Bodenteils 2 je eine abgewinkelte Erweiterung 68 (Fig. 1) aufweisen.

Der Scharnierhaken 34 kann vorzugsweise flach ausgebildet sein und zwischen seinen zwei umgebogenen Teilen einen möglichst kleinen Lufstspalt 69 aufweisen, der kleiner als die Hälfte, beispielsweise ein Drittel, der Dicke des streifenförmigen Teils 27, 28 des Klemmelementes ist.

Das den Schieber axial verschiebende System von Gleitflächen kann auch das aus der CH-576 591 bekannte System mit einer Schraube sein, deren konische Spitze exzentrisch mit einer als Anzugsfläche dienenden konischen Ausnehmung in einem im Schieber eingebauten Bolzen zusammenwirkt.

Vorzugsweise werden die verschiedenen Teile aus 0,5 bis 3 mm, beispielsweise 1,0 bis 2,5 mm, dickem Stahlblech in einem Stanzverfahren hergestellt. Die verschiedenen Stücke können gehärtet und/oder verzinkt sein. Der Exzenter 5 ist vorzugsweise aus hochfestem Stahl. Die Stirnfläche 70 des Scharnierhakens 34 kann einen von 90° verschiedenen Winkel mit der Symmetrieebene 71 des Scharnierhakens 34 bilden, und zwar vorzugsweise mit einer vorspringenden Aussenkante 72.

Die Klemmvorrichtung kann beispielsweise auch drei oder mehrere alternierende Klinken aufweisen, deren Scharnierhaken in je einer entsprechenden Öffnung 10 des Schiebers 7 untergebracht sind.

Vorzugsweise weist der Schieber 7 zwischen seinem mittleren Teil und seiner Kupplungspartie eine stufenartig gebogene Verbindungspartie 73 auf, derart, dass der mittlere Teil und die Kupplungspartie zwei zumindest angenähert parallelen Referenzebenen definieren, die sich in einem Abstand in der Grössenenordnung der Dicke des Klemmelementes befinden.

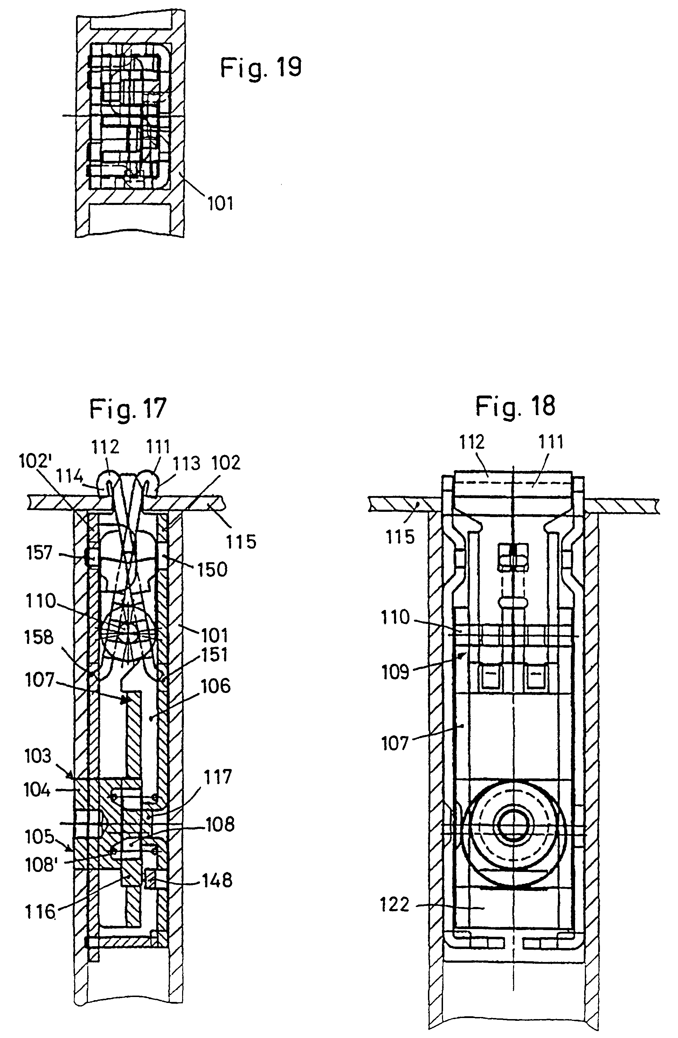

Figur 17 zeigt einen in ein erstes Profilstück 101 eingeschobenen und arretierten Einsatzkern 102 beispielsweise aus Blech. Der Deckel 102' des Einsatzkerns 102 ist mit einer Querbohrung 103 zur Aufnahme des Kopfes 104 eines Exzenters 105 und mit einem länglichen Innenraum 106 zur Aufnahme eines vorzugsweise nichtelastischen bzw. starren Ankers oder Schiebers 107 versehen, der nach einem Druckgussverfahren oder vorzugsweise auch als Stanzteil hergestellt werden kann.

Das Profilstück 101 kann beispielsweise ähnlich den entsprechenden in der CH-A-576 591 oder EP-B1-0 506 607 oder EP-B1-0 123 683 beschriebenen Elementen sein.

Der Anker 107 ist im Innenraum 106 verschiebbar gelagert, wobei auch eine in Figur 17 nur angedeutete Schraubenfeder 108' oder Tellerfeder teilweise in einer bodenseitigen Innenbohrung 108 des Exzenters 105 untergebracht sein kann.

Figur 18 zeigt, dass der Schieber 107 breit und flach ausgebildet ist und eine obere Kupplungspartie 109 aufweist, die eine Welle 110 trägt, die zur schwenkbaren Lagerung von Haltestücken oder Klinken 111, 112 dient. Solche Haltestükke sind an sich bekannt und weisen eine Nase 113, 114 (Fig. 17) auf, die in eine Öffnung eines Profilstücks 115 einfügbar ist, um einen Klemmdruck gegen eine Partie dieses Profilstücks 115 auszuüben, die die Öffnung teilweise abschliesst, wobei diese Klinken 111, 112 nichtalternierend (Fig. 18) oder alternierend (Fig. 17) mit der Nase 113, 114 in der einen oder der anderen Richtung gestapelt sein können.

Der Exzenter 105 der Klemmvorrichtung weist einen relativ hohen Exzenterkopf 104 mit Durchmesser d, eine exzentrisch zum Exzenterkopf 104 angeordnete Exzenterwalze 116 mit Durchmesser D und eine mit dem Exzenterkopf koaxiale Welle 117 auf, die aus der bodenseitigen Innenbohrung 108 des Exzenters 105 herausragt, wobei D > d ist.

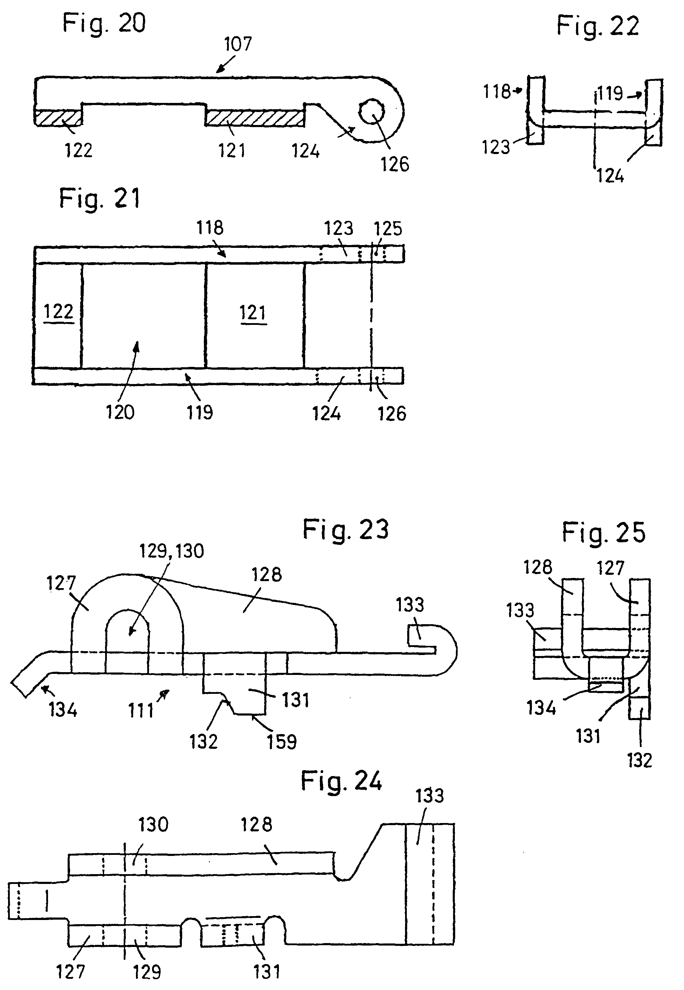

Der Schieber 107 nach den Figuren 20 bis 22 besteht grundsätzlich aus einem länglichen plattenförmigen Stück mit zwei parallelen abgewinkelten Randstreifen 118, 119. Der Boden des Schiebers 107 weist eine vorzugsweise rechteckförmige Öffnung 120 zwischen zwei flachen Bodenpartien 121, 122 und den zwei Randstreifen 118, 119 auf. Der obere Endbereich der Streifen 118, 119 ist jeweils mit einer abgerundeten laschenförmigen Erweiterung 123, 124 ausgebildet, die je eine Bohrung 125, 126 für die Lagerung der Welle 110 aufweisen, die daher quer zur Bewegungsrichtung des Schiebers montierbar ist. Gemäss Figur 20 sind die Erweiterungen 123, 124 der nach oben abgewinkelten Randstreifen 118, 119 nach unten gerichtet, so dass sich für den Schieber 107 stirnseitig eine etwa H-förmige Darstellung (Fig. 22) ergibt.

Die Klinke 111 nach den Figuren 23 bis 25 besteht grundsätzlich aus einem länglichen plattenförmigen Stück mit zwei parallelen nach oben abgewinkelten erweiterten Randpartien 127, 128. Der obere Teil der Randpartie 127 ist halbkreisförmig ausgebildet, während der obere Teil der Randpartie 128 in Form eines Trapezes mit zwei abgerundeten Ecken erweitert ist. Die Randpartien 127, 128 weisen je eine teilweise runde Öffnung 129 bzw. 130 auf, die koaxial und quer zur Bewegungsrichtung des Schiebers angeordnet sind, um die Klinke an der Welle 110 zu montieren.

Gegenüber der Randpartie 128 weist die Klinke eine nach unten abgewinkelte erweiterte Randpartie 131 auf, die mit einer rechts nach unten (Fig. 23) verlaufenden Rampe 132 versehen ist. Die rechte Endpartie der Klinke jenseits des Trapezes 128 ist nach rechts und nach oben (Fig. 24) verlängert und der Endbereich dieser Endpartie ist um ca. 180° nach oben umgebogen, um einen Haken 133 zu bilden. Demgegenüber ist die Verlängerung der linken Endpartie der Klinke jenseits der höheren Bereiche der Randpartien 127, 128, in denen sich die Öffnungen 129, 130 befinden, schmal ausgebildet und in einem Winkel nach unten gebogen, um eine geneigte Fläche 134 zu bilden.

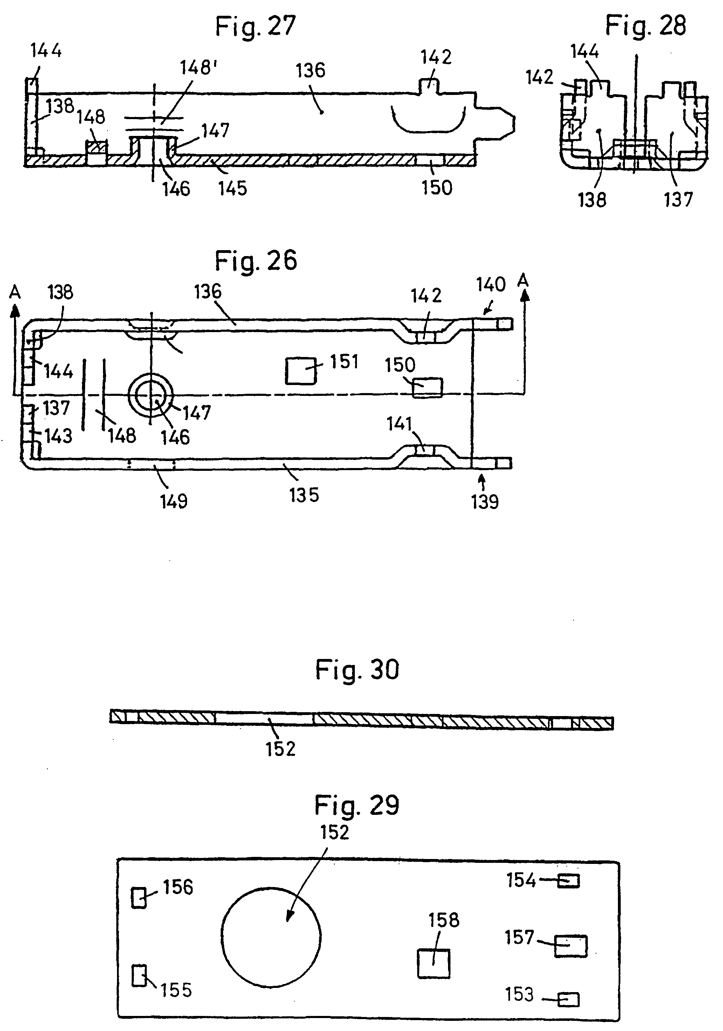

Das Gehäuse oder Chassis nach den Figuren 26 bis 28 besteht grundsätzlich aus einem länglichen plattenförmigen Stück mit zwei parallelen nach oben abgewinkelten erweiterten Randpartien 135, 136, die im linken Endbereich erweiterte Endpartien 137, 138 aufweisen, die inwendig abgewinkelt sind, um eine etwa U-förmige nahezu geschlossene Aussenwand des Gehäuses zu bilden.

In ihrem rechten offenen Endbereich weisen die Wände 135, 136 vorzugsweise je eine schwertförmige Erweiterung 139, 140 als Schutz oder Abdeckung der Klinkenhaken auf. In diesen Endbereichen, jedoch vor diesen Erweiterungen, sind die oberen Endpartien der Wände 135, 136 beulenförmig eingedrückt und mit je einem Vorsprung 141, 142 versehen. Die Endpartien 137, 138 sind auch mit je einem nach oben gerichteten Vorsprung 143, 144 versehen.

Der Boden 145 des Gehäuses weist eine runde Öffnung 146 mit einem inwendigen ringförmigen Wulst 147 auf. Zwischen dem Wulst 147 und den Wandpartien 137, 138 befindet sich im Boden 145 eine inwendig zwischen zwei parallelen Einschnitten geprägte Erhöhung 148, die quer zur Bewegungsrichtung des Schiebers verläuft. In einem der Bohrung 146 benachbarten Bereich der Wand 136 weist diese einen inwendigen beulenartig geprägten Vorsprung 148', und gegenüber diesem Vorsprung 148' weist die andere Wand 135 eine rechteckförmige Öffnung 149 auf. In einem den Vorsprüngen 141, 142 benachbarten Bereich des Bodens 145 weist dieser eine rechteckförmige Öffnung 150 auf. In einem mittleren Bereich zwischen der Öffnung 150 und der Bohrung 146 weist der Boden 145 eine weitere rechteckförmige Öffnung 151 auf, die vorzugsweise näher der Öffnung 150 als der Bohrung 146 liegt. Während der Vorsprung 148 und der Wulst 147 symmetrisch bezüglich der Symmetrieebene des Gehäuses liegen, befinden sich die Mittelpunkte der Öffnungen 150 und 151 in einem Abstand a bzw. b von dieser Symmetrieebene, wobei b > a ist.

Der Deckel nach den Figuren 29 und 30 besteht grundsätzlich aus einem plattenförmigen Stück mit einer relativ grossen runden Bohrung 152 für den Exzenterkopf, mit vier kleinen Öffnungen 153, 154, 155, 156 für die Vorsprünge 141, 142, 143 bzw. 144 und mit je einer Öffnung 157 und 158, die für dieselbe Funktion wie die Öffnungen 150 bzw. 151 vorgesehen sind.

Die Öffnungen 151 und 158 sind daher gleich gross und vorzugsweise etwas grösser als die Öffnungen 150 und 157, die unter sich auch gleich gross sind.

Wenn der Deckel durch Einführung der Vorsprünge 141, 142, 143, 144 in die Öffnungen 153, 154, 155, 156 montiert ist, kann das Gehäuse durch Vernietung fabrikmässig verschlossen werden. Im verschlossenen Zustand befinden sich die Öffnungen 150 und 157 bzw. 151 und 158 in einer symmetrischen Lage bezüglich der Symmetrieebene des Gehäuses.

Die erfindungsgemässe Ausführung der Klemmvorrichtung nach den Figuren 17 bis 30 funktioniert folgendermassen:

Im offenen Zustand rastet das Ende 159 der Randpartie 131 der Klinke (Fig. 23) in die Öffnung 150 oder 157 des Gehäuses bzw. des Deckels ein. Beim Drehen des Exzenters 105 drückt die Exzenterwalze 116 gegen den Rand der Bodenpartie 122, so dass der Schieber 107 nach innen gedrückt wird, und die Rampe 132 (Fig. 23) rutscht gegen den Rand der Öffnung 150 bzw. 157, so dass die Klinke nach aussen geschwenkt wird. Bei dieser Bewegung rastet die geneigte Fläche 134 (Fig. 23) in die entsprechende Öffnung 151 bzw. 158 ein, und die Klemmvorrichtung ist geschlossen oder fest arretiert. Im geschlossenen Zustand stützt sich die Exzenterwalze 116 auf den Vorsprung 148, so dass der Exzenterkopf 104 etwas aus dem Gehäuse herausragt und dadurch auch in der Öffnung 103 des Profilstücks 101 eingeklemmt bleibt. Im offenen Zustand befindet sich jedoch die Exzenterwalze 116 in einer vom Vorsprung 148 entfernteren Lage, so dass der Exzenter 105 gegen die Wirkung der Feder 108' nach innen am Gehäuse und aus der Öffnung 103 heraus gedrückt werden kann, was die Befreiung der Klemmvorrichtung aus dem Profilstück 101 erlaubt.

Das den Schieber axial verschiebende System von Gleitflächen kann auch das aus der CH-576 591 bekannte System mit einer Schraube sein, deren konische Spitze exzentrisch mit einer als Anzugsfläche dienenden konischen Ausnehmung in einem im Schieber eingebauten Bolzen zusammenwirkt.

Vorzugsweise werden die verschiedenen Teile aus 1 bis 3 mm, beispielsweise 1,5 bis 2,5 mm, dickem Stahlblech in einem Stanzverfahren hergestellt. Die verschiedenen Stücke können gehärtet und/oder verzinkt sein. Der Exzenter ist vorzugsweise aus hochfestem Stahl.

Vorzugsweise weist der Einsatzkern 102 mindestens teilweise zwei breite und zwei schmale Aussenwände auf, indem in einer ersten dieser zwei breiten Aussenwände Drehmittel vorhanden sind, um über ein System von Gleitflächen, die in den Schieber eingreifen, diesen axial zu verschieben.

Vorzugsweise ist der Schieber 107 und/oder das Gehäuse des Einsatzkerns 102 und/oder das Klemmelement 111 plattenförmig mit abgewinkelten Rändern ausgebildet.

Der Schieber 107 kann mindestens einen abgewinkelten Streifen 118 oder 119 mit einer laschenförmigen Erweiterung 123 bzw. 124 aufweisen, die Mittel 125 bzw. 126 umfasst, um mindestens ein Klemmelement schwenkbar zu haltern.

Das Klemmelement kann zwei nach oben abgewinkelte Randstreifen 118 oder 119 mit nach unten gerichteten, laschenförmigen Erweiterungen 123 bzw. 124 aufweisen, so dass sich für den Schieber 107 stirnseitig eine angenähert H-förmige Darstellung ergibt, wobei diese Erweiterungen 123 oder 124 je eine Bohrung 125 bzw. 126 für die Lagerung einer Welle 110 aufweisen, die zur schwenkbaren Halterung von mindestens einem Klemmelement vorgesehen ist.

Das Klemmelement kann einen abgewinkelten Streifen mit einer endseitigen T-oder Γ-förmigen Erweiterung als Haken aufweisen.

Das Klemmelement kann eine längliche plattenförmige Klinke mit mindestens einer länglichen seitlich nach oben abgewinkelten Randpartie 127 und 128, einer nach unten abgewinkelten eine Rampe 132 aufweisenden Randpartie 131, einem in Form eines Hakens 133 ausgebildeten ersten Endbereich und einem gebogenen zweiten Endbereich 134 sein.

Die Klinke kann zwei parallele längliche seitlich nach oben abgewinkelte Randpartien 127 und 128 umfassen, die je eine Öffnung 129 bzw. 130 für die Lagerung der Welle 110 aufweisen, die zur schwenkbaren Halterung der Klinke am Schieber vorgesehen ist.

Der erste Endbereich 133 der Klinke 111 kann um ungefähr 180° nach oben umgebogen und der zweite Endbereich 134 in einem Winkel nach unten gebogen sein.

Der Einsatzkern 102 kann ein im Querschnitt U-förmig ausgebildetes Gehäuse und einen plattenförmigen Deckel 102' umfassen.

Das Gehäuse und/oder der Deckel kann eine zur teilweisen Aufnahme der mit der Rampe 132 versehenen Randpartie 131 der Klinke 111 vorgesehene Öffnung 150 bzw. 157 aufweisen.

Der Deckel 102' und/oder das Gehäuse kann eine zur teilweisen Aufnahme des gebogenen zweiten Endbereiches 134 vorgesehene Öffnung 151 bzw. 158 aufweisen.

Das den Schieber axial verschiebende System von Gleitflächen kann ein Exzentersystem sein, das entweder eine Exzenterwalze oder eine Schraube umfasst, deren konische Spitze exzentrisch mit einer als Anzugsfläche dienenden konischen Ausnehmung in einem Bolzen zusammenwirkt, der im Schieber eingebaut ist.

## Patentansprüche

1. Klemmvorrichtung zum lösbaren Verbinden zweier Profilstücke, wobei in einem ersten der Profilstücke ein Einsatzkern (1) einfügbar und fixierbar ist, in dem ein axial beweglicher Schieber (7) zwei schwenkbare Klemmelemente (11, 12; 13, 14) mit einem Klemmhaken (13, 14; 133) trägt, der wenigstens teilweise in eine Öffnung eines zweiten Profilstücks (15) einfügbar ist, um einen Klemmdruck gegen eine Partie des zweiten Profilstücks (15) auszuüben, die die Öffnung teilweise abschliesst, wobei der Einsatzkern (1) Drehmittel aufweist, um über ein erstes System von Gleitflächen, die in den Schieber (7, 107) eingreifen, diesen axial zu verschieben, und wobei im Einsatzkern (1) ein zweites System von Gleitflächen vorhanden ist, um die beiden Klemmelemente (11, 12; 111) bei ihrer axialen Verschiebung quer zu verschieben, wobei die Klemmelemente (11, 12; 111) jeweils einen länglichen flachen Teil (27, 28) aufweisen, dessen ein Ende in der breiten Querrichtung als Klemmhaken (33; 133) ausgebildet ist, und wobei der Schieber (7; 107) und die beiden Klemmelemente (11, 12; 111) komplementäre Mittel (10, 34; 125, 126; 129, 130, 110) aufweisen, um die Klemmelemente (11, 12; 111) schwenkbar um eine Achse zu haltern, die parallel zu dieser breiten Querrichtung des jeweiligen länglichen Teils (27, 28) verläuft, **dadurch gekennzeichnet, dass** das andere Ende der länglichen Teile (27, 28) der Klemmelemente (11, 12; 111) als Scharnierhaken (34) ausgebildet ist und dass der Schieber (7) ein flaches Endteil (9) mit zwei Ausnehmungen (10, 10') zur passenden Aufnahme der Scharnierhaken (34) der Klemmelemente (11, 12; 111) aufweist, um durch den Scharnierhaken (34) und eine Ausnehmung (10 bzw. 10') jeweils ein Schwenkscharnier für das zugeordnete Klemmelement (11, 12; 111) zu bilden.

2. Klemmvorrichtung nach Anspruch 1, **dadurch gekennzeichnet, dass** das andere Ende der länglichen Teile (27, 28; 111) jeweils in Form eines zweiten Hakens (34; 114) ausgebildet ist und dass die Klemmhaken (33; 113) und diese zweiten Haken (34; 114) in entgegengesetzten Richtungen gerichtet sind.

3. Klemmvorrichtung nach Anspruch 1 oder 2, **dadurch gekennzeichnet, dass** der Scharnierhaken (34) zwischen seinen zwei umgebogenen Teilen einen Luftspalt (69) aufweist, der kleiner als die Hälfte der Dicke des länglichen Teils (27, 28) des Klemmelementes (11, 12; 111) ist.

4. Klemmvorrichtung nach einem der Ansprüche 1 bis 3, **dadurch gekennzeichnet, dass** der längliche Teil der Klemmelemente (11, 12; 111) jeweils zwei um einen kleinen Winkel gebogene Partien (27 bzw. 28) aufweist, die eine konkave Seite definieren, an deren einem Ende sich der Scharnierhaken (34) befindet.

5. Klemmvorrichtung nach einem der Ansprüche 1 bis 4, **dadurch gekennzeichnet, dass** die Stirnfläche (70) des Scharnierhakens (34) einen von 90° verschiedenen Winkel mit der Symmetrieebene (71) des Scharnierhakens (34) bildet und vorzugsweise eine vorspringende Aussenkante (72) aufweist.

6. Klemmvorrichtung nach einem der Ansprüche 1 bis 5, **dadurch gekennzeichnet, dass** das Klemmelement zwischen dem länglichen Teil (27, 28) und dem Klemmhaken (33) eine rampenförmige Partie (32) aufweist, die einen ersten Teil des zweiten Systems von Gleitflächen bildet, und dass der zweite Teil des zweiten Systems von Gleitflächen durch einen mit schrägen Flächen (43, 44) versehenen Steg (40) gebildet ist, dessen Enden (41, 42) je an einer der zwei schmalen Seiten des Einsatzkernes und senkrecht zur Bewegungsrichtung des Schiebers (7) befestigt sind.

7. Klemmvorrichtung nach Anspruch 6, **dadurch gekennzeichnet, dass** der Einsatzkern (1) einen im Querschnitt zumindest angenähert U-förmig ausgebildeten Bodenteil (2) und einen etwa plattenförmigen Deckel (2') umfasst, und dass die Seitenwände des Bodenteils je einen Einschnitt aufweisen, die mit laschenförmig abgewinkelten Erweiterungen des Deckels zusammenwirken, um dazwischen die Enden des Stegs mit den schrägen Flächen zu befestigen.

8. Klemmvorrichtung nach einem der Ansprüche 1 bis 7, **dadurch gekennzeichnet, dass** der Schieber (7) zwischen dem mittleren Teil und der Kupplungspartie eine stufenartig gebogene Verbindungspartie (73) aufweist.

9. Klemmvorrichtung nach einem der Ansprüche 1 bis 8, **dadurch gekennzeichnet, dass** der Einsatzkern (2; 102) mindestens teilweise zwei breite und zwei schmale Aussenwände aufweist, indem in einer ersten dieser zwei breiten Aussenwände Drehmittel vorhanden sind, um über ein System von Gleitflächen, die in den Schieber eingreifen, diesen axial zu verschieben.

10. Klemmvorrichtung nach einem der Ansprüche 1 bis 9, **dadurch gekennzeichnet, dass** der Einsatzkern (2; 102) ein im Querschnitt U-förmig ausgebildetes Gehäuse und einen plattenförmigen Deckel (102') umfasst.

## Claims

1. Clamping device for the releasable connection of two profile pieces, it being possible for an insert core (1) to be introduced and fixed in a first of the profile pieces, in which insert core an axially movable slide (7) bears two pivotable clamping elements (11, 12; 13, 14) with a clamping hook (13, 14; 133) which can be introduced at least partially into an opening of a second profile piece (15) in order to exert a clamping pressure on that section of the second profile piece (15) which partially closes off the opening, the insert core (1) having rotary means in order, via a first system of sliding surfaces which engage in the slide (7, 107), to displace the latter axially, and a second system of sliding surfaces being provided in the insert core (1) in order to displace the two clamping elements (11, 12; 111) transversely during their axial displacement, the clamping elements (11; 12; 111) each having an elongate flat part (27, 28), of which one end is designed, in the broad transverse direction, as a clamping hook (33; 133), and the slide (7; 107) and the two clamping elements (11, 12; 111) having complementary means (10, 34; 125, 126; 129, 130, 110) in order to retain the clamping elements (11, 12; 111) such that they can pivot around a pin which runs parallel to this broad transverse direction of the respective elongate part (27, 28), **characterized in that** the other end of the elongate parts (27, 28) of the clamping elements (11, 12; 111) is designed as a hinge hook (34), and **in that** the slide (7) has a flat end part (9) with two apertures (10, 10') into which the hinge hooks (34) of the clamping elements (11, 12; 111) can be fitted, in order for the hinge hook (34) and an aperture (10 or 10') to form in each case one pivot hinge for the associated clamping element (11, 12; 111).

2. Clamping device according to Claim 1, **characterized in that** the other end of the elongate parts (27, 28; 111) is designed in each case in the form of a second hook (34; 114), and **in that** the clamping hooks (33; 113) and these second hooks (34; 114) are oriented in opposite directions.

3. Clamping device according to Claim 1 or 2, **characterized in that**, between its two bent-over parts, the hinge hook (34) has an air gap (69) which is smaller than half the thickness of the elongate part (27, 28) of the clamping elements (11, 12, 111).

4. Clamping device according to one of Claims 1 to 3, **characterized in that** the elongate part of the clamping elements (11, 12; 111) has in each case two sections (27 and 28) which are bent by a small angle and define a concave side, at one end of which the hinge hook (34) is located.

5. Clamping device according to one of Claims 1 to 4, **characterized in that** the end face (70) of the hinge hook (34) forms an angle of other than 90° with the symmetry plane (71) of the hinge hook (34) and preferably has a protruding outer edge (72).

6. Clamping device according to one of Claims 1 to 5, **characterized in that**, between the elongate part (27, 28) and the clamping hook (33), the clamping element has a ramp-like section (32) which forms a first part of the second system of sliding surfaces, and **in that** the second part of the second system of sliding surfaces is formed by a crosspiece (40) which is provided with oblique surfaces (43, 44) and whose ends (41, 42) are each fastened on one of the two narrow sides of the insert core, perpendicular with respect to the movement direction of the slide (7).

7. Clamping device according to Claim 6, **characterized in that** the insert core (1) comprises a cross-sectionally at least approximately U-shaped base part (2) and an approximately plate-like cover (2'), and **in that** the side walls of the base part each have an incision, these incisions interacting with extensions of the cover, which are angled in the form of lugs, in order to fasten therebetween the ends of the crosspiece with the oblique surfaces.

8. Clamping device according to one of Claims 1 to 7, **characterized in that**, between the central part and the coupling section, the slide (7) has a connecting section (73) which is bent in a step-like manner.

9. Clamping device according to one of Claims 1 to 8, **characterized in that** the insert core (2; 102) has, at least in part, two broad and two narrow outer walls, rotary means being provided in the first of these two broad outer walls in order, via a system of sliding surfaces which engage in the slide, to displace the latter axially.

10. Clamping device according to one of Claims 1 to 9, **characterized in that** the insert core (2; 102) comprises a cross-section of the U-shaped housing and a plate-like cover (102').

## Revendications

1. Dispositif de serrage pour réunir de façon amovible deux pièces profilées, dans lequel un noyau d'insertion (1) peut être inséré et fixé dans une première des pièces profilées, noyau dans lequel un poussoir (7) déplaçable axialement porte deux éléments de serrage pivotants (11, 12; 13, 14) comportant un crochet de serrage (13, 14; 133), qui peut être inséré au moins partiellement dans une ouverture d'un second élément profilé (15) pour appliquer une pression de serrage contre une partie de la seconde pièce profilée (15), qui ferme partiellement l'ouverture, et dans lequel le noyau d'insertion (1) comporte des moyens d'entraînement en rotation pour déplacer axialement le poussoir (7, 107) par l'intermédiaire d'un premier système de surfaces de glissement, qui s'engagent dans le poussoir (7, 107), et dans lequel un second système de surfaces de glissement est présent dans le noyau d'insertion (1) pour déplacer transversalement les deux éléments de serrage (11, 12; 111) lors de leur déplacement axial, et dans lequel les éléments de serrage (11, 12; 111) possèdent chacun une partie plate allongée (27, 28), dont une extrémité est agencée sous la forme d'un crochet de serrage (33; 133) dans la direction transversale large, et dans lequel le poussoir (7; 107) et les deux éléments de serrage (11, 12; 111) comportent des moyens complémentaires (10, 34; 125, 126; 129, 130; 110) pour retenir les éléments de serrage (11, 12; 111) de manière qu'ils puissent pivoter autour d'un axe, qui s'étend parallèlement à cette direction transversale large de la partie allongée respective (27, 28), **caractérisé en ce que** l'autre extrémité des parties allongées (27, 28) de éléments de serrage (11, 12; 111) est agencée en forme de crochet de charnière (34) et que le poussoir (7) comporte une partie d'extrémité plate (9) pourvue de deux évidements (10, 10') servant à loger d'une manière adaptée le crochet de charnière (34) des éléments de serrage (11, 12; 111), pour former, au moyen du crochet de charnière (34) et d'un évidement (10 ou 10'), respectivement une charnière pivotante pour l'élément de serrage associé (11, 12; 111).

2. Dispositif de serrage selon la revendication 1, **caractérisé en ce que** l'autre extrémité des parties allongées (27, 28; 111) est agencée respectivement sous la forme d'un second crochet (34; 114) et que les crochets de serrage (33; 113) et ces seconds crochets (34; 114) sont dirigés dans des directions opposées.

3. Dispositif de serrage selon la revendication 1 ou 2, **caractérisé en ce que** le crochet de charnière (34) possède, entre ses deux parties coudées, une fente (69), qui est inférieure à la moitié de l'épaisseur de la partie allongée (27, 28) de l'élément de serrage (11, 12; 111).

4. Dispositif de serrage selon l'une des revendications 1 à 3, **caractérisé en ce que** la partie allongée des éléments de serrage (11, 12; 111) comporte respectivement deux parties (27 et 28) repliées sous un angle faible et qui définissent un côté concave, sur une extrémité duquel est situé le crochet de charnière (34).

5. Dispositif de serrage selon l'une des revendications 1 à 4, **caractérisé en ce que** la surface frontale (70) du crochet de charnière (34) forme un angle différent de 90° avec le plan de symétrie (71) du crochet de charnière (34), et possède de préférence une arête extérieure saillante (72).

6. Dispositif de serrage selon l'une des revendications 1 à 5, **caractérisé en ce que** l'élément de serrage comporte, entre la partie allongée (27, 28) et l'élément de serrage et l'élément de serrage (33), une partie en forme de rampe (32), qui forme une première partie du second système de surfaces de glissement, et que la deuxième partie du second système de surfaces de glissement est formée par une barrette (40), qui est pourvue de surfaces obliques (43, 44), dont les extrémités (41, 42) sont fixées respectivement à l'un des deux petits côtés du noyau d'insertion et perpendiculairement à la direction de déplacement du poussoir (7).

7. Dispositif de serrage selon la revendication 6, **caractérisé en ce que** le noyau d'insertion (1) comprend une partie de base (2) au moins approximativement en forme de U en coupe transversale, et un couvercle (2') approximativement en forme de plaque, et que les parois latérales de la partie de base possèdent respectivement une encoche, ces encoches coopérant avec des élargissements coudés en forme de pattes du couvercle pour fixer entre elles les extrémités de la barrette portant les surfaces obliques.

8. Dispositif de serrage selon l'une des revendications 1 à 7, **caractérisé en ce que** le poussoir (7) possède, entre la partie médiane et la partie d'accouplement, une partie de liaison de forme étagée (73).

9. Dispositif de serrage selon l'une des revendications 1 à 8, **caractérisé en ce que** le noyau d'insertion (2; 102) possède au moins en partie deux parois extérieures larges et deux parois extérieures étroites, par le fait que des moyens d'entraînement en rotation sont présents dans la première de ces deux parois extérieures larges, pour déplacer axialement le poussoir par l'intermédiaire d'un système de surfaces de glissement, qui s'engagent dans le poussoir.

10. Dispositif de serrage selon l'une des revendications 1 à 9, **caractérisé en ce que** le noyau d'insertion (2; 102) comporte un boîtier agencé en forme de U en coupe transversale et un couvercle en forme de plaque (102').
